# EUROPÄISCHE PATENTSCHRIFT

(11) **EP 0 502 359 B1**
(45) Veröffentlichungstag und Bekanntmachung des Hinweises auf die Patenterteilung: **02.01.1997**
(21) Anmeldenummer: 92102737.1
(22) Anmeldetag: 19.02.1992
(51) Int. Cl.: B23K 9/013

(54) **Verfahren zum thermischen Schneiden von Werkstücken aus Metall und Schneidbrenner zur Ausübung dieses Verfahrens**
Metallic workpieces thermo-cutting method and cutting torch therefor
Méthode de coupe thermique de pièces métalliques, ainsi que chalumeau de découpage pour la mise en oeuvre

(30) Priorität: 06.03.1991 DE 4107059
(43) Veröffentlichungstag der Anmeldung: 09.09.1992
(73) Patentinhaber: Löffler, Hans-Joachim, Dr.-Ing., D-68766 Hockenheim (DE)
(72) Erfinder: Löffler, Hans-Joachim, Dr.-Ing., D-68766 Hockenheim (DE)
(74) Vertreter: Clemens, Gerhard, Dr.-Ing.

(56) Entgegenhaltungen:
- EP-A- 0 121 870
- US-A- 4 916 270
- PATENT ABSTRACTS OF JAPAN vol. 9, no. 107 (M-378)(1830) 11. Mai 1985

## Beschreibung

Die Erfindung betrifft ein Verfahren zum thermischen Schneiden von Werkstücken aus Metall, bei dem mit Hilfe einer Wärmequelle hohe Energiedichte auf einen begrenzten, die Schneidstelle bildenden Teil des Werkstückes eingewirkt wird und bei dem gleichzeitig damit ein Sauerstoffstrahl auf die Schneidstelle gerichtet wird, und einen Schneidbrenner zur Ausübung dieses Verfahrens.

Die Zündtemperatur der Schneidstelle wird vorzugsweise durch einen elektrischen Lichtbogen erbracht, sie kann aber auch durch Laser, Elektronenbeschuß oder dergleichen erbracht werden.

Aus der EP-A1-0 121 870 ist ein Verfahren dieser Art bekannt, bei dem eine Elektrode mit Abstand oberhalb des flachen Werkstücks endet und auf einen sich bildenden Schneidkanal im Werkstück gerichtet ist. Der dadurch hervorgerufene Schneidvorgang durchsetzt das gesamte Werkstück und schreitet fort, indem die Kanalfront als Ganzes vorangetrieben und dadurch der Schneidkanal verlängert wird. Der Sauerstoffstrahl wird koaxial zur Elektrode zugeführt, spreizt sich beim Erreichen des Lichtbogens um diesen und trifft dann auf die Oberfläche des Werkstücks. Dieses bekannte Verfahren ist nur bei geringer Werkstückstärke anwendbar.

Aufgabe der Erfindung ist es, ein Verfahren und einen Schneidbrenner der eingangs genannten Art so auszugestalten, daß damit auch stärkere Werkstücke geschnitten werden können.

Die verfahrensmäßige Lösung dieser Aufgabe ist dadurch gekennzeichnet, daß die Schneidstelle jeweils nur auf einen Abschnitt der Front in Dickenrichtung einer Schneidfuge beschränkt ist, und zwar auf den in Dickenrichtung lokal vorstehenden Abschnitt, daß nachdem die Schneidfront auf dem jeweiligen Abschnitt ein Stück vorangetrieben ist, die Schneidstelle auf einen Frontabschnitt verlegt ist, der weniger weit vorangetrieben ist, als der vorherige und so fort, daß die Wärmequelle hoher Energiedichte ein jeweils zeitlich begrenzt vorhandener Lichtbogen, ein Plasmabogen, ein Laser- oder Elektronenstrahl ist, der örtlich an der Stelle des am meisten in Dickenrichtung vorstehenden Schneidfrontabschnittes das Werkstück auf mindestens Zündtemperatur erwärmt, und daß der Sauerstoff in einem scharf gebündelten Strahl, vorzugsweise mit Überschallgeschwindigkeit, an die Schneidstelle innerhalb der Schneidfuge geblasen wird.

Die Wärmequelle ist immer nur auf einem begrenzten Tiefenabschnitt wirksam. Beim Stande der Technik bestimmt die Ausdehnung dieses Abschnittes die zu behandelnde Werkstückstärke. Nach der Erfindung wird dieser Abschnitt entlang der Schneidfront der Schneidfuge verlegt auch in tiefere Bezirke der Schneidfuge, so daß man auf diese Weise sehr tiefe Schneidfugen bearbeiten und damit entsprechend starke Werkstücke schneiden kann.

Die Zündtemperatur ist diejenige Temperatur, bei der der Werkstoff mit Sauerstoff heftig chemisch reagiert, das heißt eine exotherme Reaktion abläuft. Die Zündtemperatur bei Eisen beträgt ca. 1054°C. Durch die Wärmequelle wird einer kleiner Fleck des Werkstückes auf mindestens Zündtemperatur erwärmt. Dieser kleine Fleck wird in der Regel jedoch wesentlich höher erwärmt auf etwa 1500 bis 2000°C beziehungsweise noch darüber. Dann verdampfen bereits einige Werkstoffe. Auf diesen hocherwärmten Fleck mit in der Regel bereichts flüssigem Werkstoff trifft nun der Sauerstoffstrahl und reagiert chemisch. Die dabei frei werdende exotherme Wärme bringt einen weiteren Teil des Werkstücks auf das zum Schneiden erforderliche Temperaturniveau, und zwar auch dann, wenn die Wärmequelle keine weitere Wärme zuführt. Durch Wärmeverluste ist dann aber nach einiger Zeit unter Umständen das zum Schneiden erforderliche Temperaturniveau nicht mehr vorhanden und der Schneidvorgang muß neu, zum Beispiel mit einem Lichtbogen, gestartet oder gezündet werden.

Erfindungsgemäß ist es möglich, den Sauerstoffstrahl auf die Schneidstelle zu richten, also diejenigen Bezirke des Werkstückes, an denen das Werkstückmaterial durch den Lichtbogen auf mindestens Zündtemperatur gebracht wird. Der Materialabtrag wird durch den Sauerstoff chemisch beschleunigt und durch den physikalischen Strahldruck unterstützt, indem das aufgeschmolzene und verbrannte Material zur anderen Seite aus der Schneidfuge herausgeschleudert wird.

Diese Wirkung des Sauerstoffstrahls ist auf das Bündel des Strahls und damit entsprechend scharf begrenzt und das führt zu einer scharf begrenzten Wirkung und trägt damit zur Ausbildung einer glatten Schnittfläche bei.

Ein Strahl mit Überschallgeschwindigkeit läßt sich entsprechend scharf bündeln, dementsprechend genau richten und enthält auch die gewünschte kinetische Energie, um den angestrebten physikalischen Effekt mit großer Wirkung herbeizuführen. Durch entsprechend scharfe Bündelung und zielgerichtete Plazierung infolge Düsenanordnung lassen sich Sauerstoffverluste vermeiden, die dadurch entstehen, daß Teile des Strahls an der Schneidstelle vorbeigeblasen werden, wie dies beim eingangs beschriebenen Stand der Technik für erhebliche Teile des zugeführten Sauerstoffs der Fall ist.

Vorzugsweise wird zur Bildung der Schneidstelle ein Lichtbogen zwischen der Mantelfläche einer Elektrode und dem Werkstück erzeugt.

Als Elektrode kann eine Drahtelektrode eingesetzt sein, deren freies Ende sich innerhalb der Schneidfuge im wesentlichen entlang der Schneidfront erstreckt. Diese Elektrode findet dann an einer wenig vorgerückten Stelle der Kanalfront, an der zwangsläufig der Abstand zwischen Elektrode und Schneidfront sehr gering ist, elektrischen Kontakt für die Ausbildung des Lichtbogens, durch den dann der betreffende Abschnitt der Schneidfront auf mindestens Zündtemperatur erwärmt wird und der Sauerstoffstrahl das Metall verbrennt und anschließend wegbläst und somit ein Teil des Werkstoffs abgetragen wird, und damit verlegt sich der Lichtbogen im Zuge der weiteren Nachführung der Drahtelektrode an eine andere Stelle der Schneidfront, die auf diese Weise abschnittsweise über die ganze Frontlänge vorangetrieben wird.

Eine andere bevorzugte Ausgestaltung der Elektrode besteht darin, daß das freie Ende einer drahtförmigen Elektrode innerhalb der Schneidfuge schräg zur Schneidfront auf diese gerichtet ist und daß die Schneidstelle verlegt wird durch Verschieben des freien Endes der Elektrode entlang der Schneidfront. Infolge der schrägen Anordnung der Elektrode bildet sich der Lichtbogen immer am Ende der Elektrode aus, das durch Hin- und Herschwenken oder Hin- und Herbewegen der Elektrode innerhalb der Schneidfuge nacheinander an die verschiedenen Abschnitte der Schneidfront gebracht wird, die auf diese Weise nacheinander abgetragen werden.

Eine weitere bevorzugte Ausgestaltung des erfinderischen Verfahrens ist dadurch gekennzeichnet, daß eine bandförmige Elektrode eingesetzt wird, die innerhalb der Schneidfuge schräg zur Schneidfront auf diese zugeführt wird und so breit ist, daß sich der durch Abbrennen bildende vordere Rand der Bandelektrode im wesentlichen über die ganze Länge der Schneidfront erstreckt.

Diese bandförmige Elektrode findet an einem oder mehreren Abschnitten der Schneidfront, an denen ein besonders geringer Abstand besteht, den nötigen elektrischen Kontakt zur Ausbildung eines oder mehrerer Lichtbögen, durch den oder die dann der jeweilige Abschnitt in der Folge abgetragen wird. Anschließend verlegt sich der Lichtbogen nach den selben Prinzipien wie das mit der sich entlang der Schneidfront erstreckenden Elektrode beschrieben wurde.

Die Bandelektrode muß sich nicht unbedingt bis an dasjenige Frontende erstrecken, das der Sauerstoffzufuhr abgekehrt ist, weil eine gewisse Schneidtiefe über das Ende der Elektrode hinaus erzielbar ist durch die Wirkung des Sauerstoffstrahls, der das unmittelbar an den Lichtbogen angrenzende Werkstückmaterial, das von dem Lichtbogen beziehungsweise Prozeßwärme mit erhitzt ist, austreibt.

Bei Einsatz der schräg gerichteten Elektrode wird durch Bewegen der Elektrode die Lage der Schneidstelle auf der Schneidfront bestimmt. Man kann aber auch bei Einsatz der entlang der Schneidfront gerichteten Drahtelektrode und bei Einsatz der bandförmigen Elektrode durch Bewegen der Elektrode während des Betriebes die Lage beeinflussen, an der sich entlang der Schneidfront der Lichtbogen und damit die Schneidstelle ausbildet.

Für solche Fälle empfiehlt es sich, daß der Schneidvorgang an dem der Sauerstoffzufuhr zugekehrten ersten Ende der Schneidfront begonnen wird, daß durch Bewegen des freien Elektrodenendes die Schneidstelle die Schneidfront entlang zum anderen Ende der Schneidfront verschoben wird und daß dann am ersten Ende der Schneidfront wieder neu begonnen wird und so fort.

Diese Verfahrenstechnik führt, wie die Erfahrung zeigt, zu einer besonders glatten Ausbildung der Schnittflächen.

Eine weitere Aufgabe der Erfindung ist es, einen Schneidbrenner der eingangs genannten Art so auszugestalten, daß sichergestellt ist, daß kein Sauerstoff in den Führungskanal der Electrode gelangt. Die Lösung dieser Aufgabe ist im Anspruch 7 gekennzeichnet.

Der Führungskanal sperrt das Innere des Schneidbrenners gegen unerwünscht zurückströmenden Sauerstoff ab. Das gelingt bei mit Überschallgeschwindigkeit an den Mündungen der Düsenkanäle austretendem Sauerstoff aber zuverlässig nur bei der gewählten Anordnung.

Eine bevorzugte Ausgestaltung eines Schneidbrenners nach der Erfindung ist dadurch gekennzeichnet, daß dem Führungskanal axial und mit Abstand ein Kontaktkanal eines Kontaktrohrs vorgeordnet ist und daß ein Fluidsystem zur Kühlung vorgesehen ist, in das der Kontaktkanal, insbesondere gleichgerichtet mit dem Elektrodenvorschub, und Umfangsbereiche des Kontaktrohres einbezogen sind.

Das Fluidsystem kühlt einerseits das Kontaktrohr und trägt andererseits dazu bei, zurückströmenden Sauerstoff vom Eintritt in das Kontaktrohr fernzuhalten.

Sollten tatsächlich einmal Spuren von Sauerstoff gegen den Elektrodenvorschub durch den Führungskanal strömen, dann werden diese dort durch den Kühlstrom unschädlich abgeführt.

Die Erfindung wird nun anhand der beigefügten Zeichnung näher erläutert.

In der Zeichnung zeigt:
- Figur 1: im Querschnitt einen Schneidvorgang mit einer Drahtelektrode, die sich entlang der Schneidfront erstreckt,
- Figur 1a: den Ausschnitt Ia aus Figur 1, stark vergrößert,
- Figur 2: den Schnitt II aus Figur 1,
- Figur 3: die Darstellung aus Figur 1, jedoch in einer anderen Betriebsstellung,
- Figur 4: den Schnitt IV aus Figur 3,
- Figur 5: in der Darstellung entsprechend Figur 1 den Einsatz einer bandförmigen Elektrode,
- Figur 6: den Schnitt III aus Figur 5,
- Figur 7: in der Darstellung entsprechend Figur 1 den Einsatz einer schräg auf die Schneidfront gerichteten Drahtelektrode,
- Figur 8: den Schnitt VIII aus Figur 7,
- Figur 9: einen Schneidbrenner zur Anwendung in Verbindung mit Figur 1 bis 4 im Längsschnitt,
- Figur 10: den Schnitt X aus Figur 9,
- Figur 11 bis 15: Schnittdarstellungen entsprechend Figur 10 von Ausführungsbeispielen, die gegenüber Figur 9 abgeändert sind.

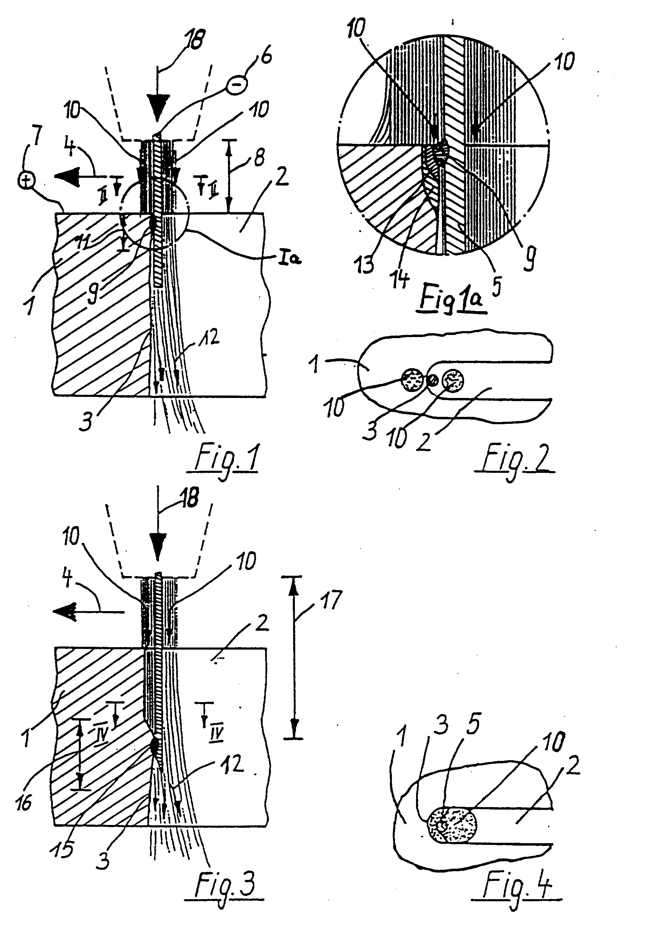

In Figur 1 und 2 ist ein Werkstück 1 aus Metall dargestellt, das durchgeschnitten werden soll. Der Schneidvorgang ist in der Schneidfuge 2 schon bis zu der Schneidfront 3 vorangeschritten und schreitet weiter in Pfeilrichtung 4 fort. Links von der Schneidfuge 2 ist das Material noch ungeschnitten.

Zum Schneiden dient eine gerade Drahtelektrode 5, die vorzugsweise mit dem Minuspol 6 einer Gleichspannungsquelle kontaktiert ist. Mit dem zugehörigen Pluspol 7 ist das Werkstück 1 kontaktiert. Am freien Ende 8 der Elektrode 5 (Mantelfläche oder Stirnfläche) bildet sich ein Lichtbogen 9 aus, durch den brennt die Elektrode ab und wird zum Ausgleich in Pfeilrichtung 18 laufend nachgeschoben. Koaxial zur Elektrode 5 wird ein Sauerstoffstrahl 10, der scharf gebündelt ist und mit Überschallgeschwindigkeit geblasen wird, auf die durch den Lichtbogen 9 definierte Schneidstelle 11 gerichtet. Der Sauerstoffstrahl umhüllt die Elektrode 5 vollständig und ist so scharf gebündelt, daß er fast vollständig in die Schneidfuge 2 eintritt und auf die Schneidstelle 11 trifft.

In der Schneidstelle wird Material von der Schneidfront 3 abgetragen, dabei zum Teil oxydiert und in Pfeilrichtung 12, also in Verlängerung des Sauerstoffstrahls aus der Schneidfuge 2 herausgeschleudert, angetrieben durch die kinetische Energie des Sauerstoffstrahls.

Die unmittelbare Wirkung der Schneidstelle 11 ist beschränkt auf den Bereich des Werkstoffs mit Zündtemperatur 13 und einen zusätzlichen Werkstoffabtrag 14 infolge der entstehenden Prozeßwärme im angezeigten Abschnitt der Schneidfront 3, die, wie dargestellt, wesentlich länger ist als dieser Abschnitt. Sobald die Schneidfront im Bereich dieses Abschnittes durch die Schneidwirkung vorangetrieben worden ist, ist der Abstand zwischen der Drahtelektrode und anderen Abschnitten der Schneidfront kürzer und die Bedingungen sind dort günstiger für die Ausbildung des Lichtbogens.

Der Lichtbogen wandert dann im Zuge des Nachschubes der Elektrode 5 nach unten oder durch schnelleres Abbrennen der Elektrode nach oben und ein neuer Abschnitt der Schneidfront wird abgetragen. Das ist in Figur 3 und 4 dargestellt, in der im übrigen die gleichen Bezugsziffern wie in Figur 1 und 2 verwendet sind, weil die gleichen Teile eingesetzt werden.

Der Lichtbogen 15 definiert nun die Schneidstelle 16, deren Wirkung sich auf den unmittelbaren Abschnitt beschränkt und unterhalb des Abschnitts gemäß Doppelpfeil 11 liegt. Auf diese Weise wird durch wechselnde Abschnitte ständig die ganze Schneidfront, bezogen auf die Zeichnung nach links, vorangetrieben, während gleichzeitig die Drahtelektrode 5 mit entsprechender Vorschubgeschwindigkeit in Pfeilrichtung, also in Richtung Werkstoffabtragung, nachgeführt wird.

Bemerkenswert ist, daß der Sauerstoffstrahl 10 so scharf gebündelt ist, daß er auch in den tiefen Bereichen der Schneidfuge entsprechend Figur 3 und bei noch tiefer gelegenen Schneidstellen im wesentlichen verlustfrei auf die Schneidstelle trifft.

Die Schneidstelle ist jeweils nur auf einen Abschnitt gemäß Doppelpfeil 11 beziehungsweise 16 der Schneidfront 3 beschränkt. Nachdem die Schneidfront auf dem jeweiligen Abschnitt ein Stück vorangetrieben ist, wird die Schneidstelle auf einen anderen Abschnitt, zum Beispiel vom Abschnitt gemäß Doppelpfeil 11 auf den Abschnitt gemäß Doppelpfeil 16 verlegt, der weniger weit vorangetrieben ist als der vorherige und so fort.

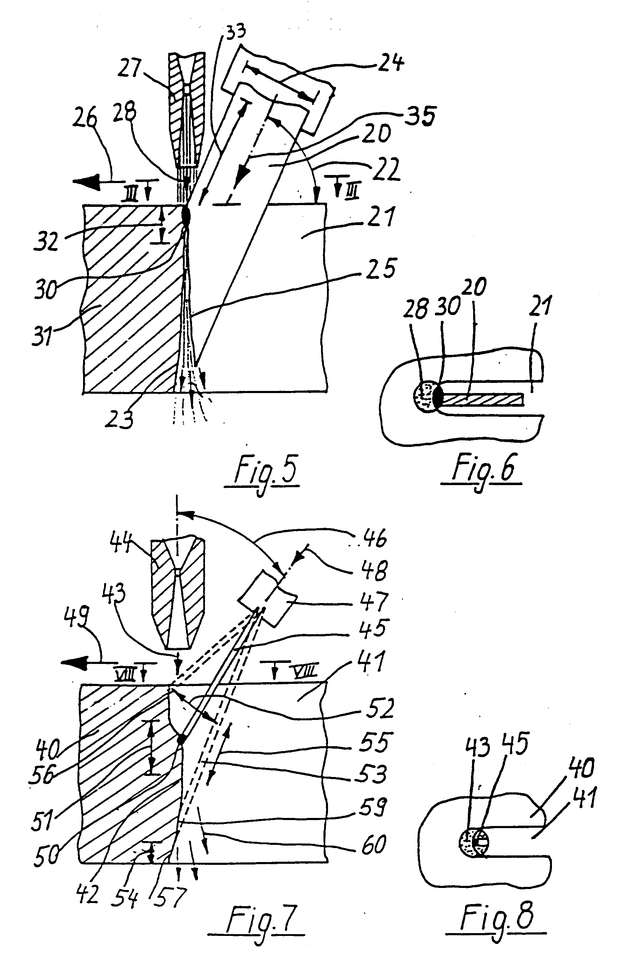

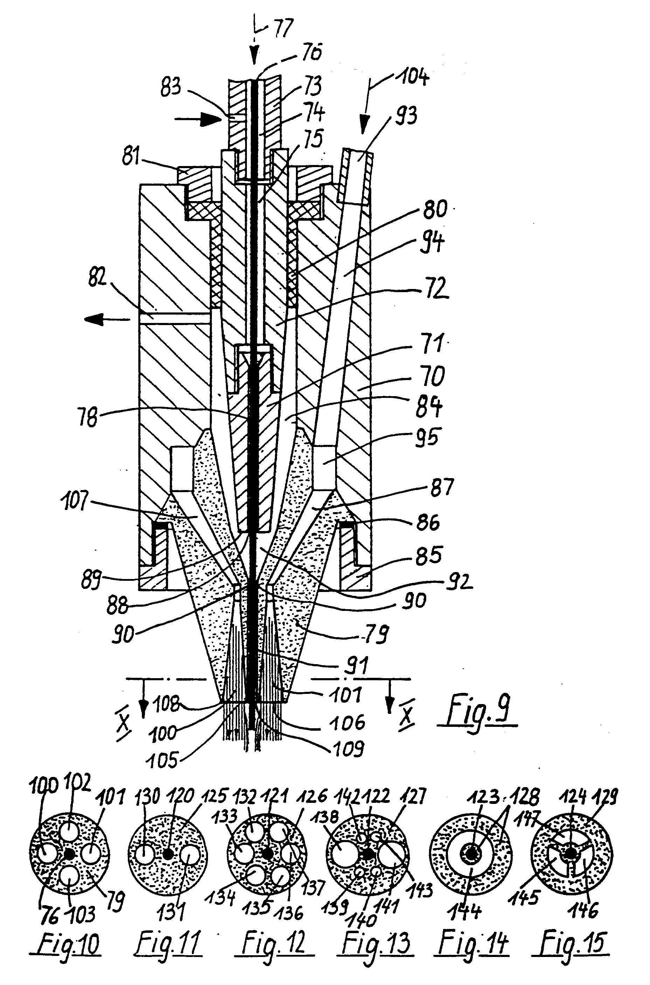

Bei dem in Figur 5 und 6 dargestellten Ausführungsbeispiel ist eine bandförmige Elektrode 20 eingesetzt, die innerhalb der Schneidfuge 21 schräg entsprechend dem Winkel 22 zur Schneidfront 23 auf diese gerichtet ist. Die Elektrode 20 ist gemäß dem Doppelpfeil 24 so breit, daß sich die durch Abbrennen bildende vordere Stirnfläche 25 der Elektrode 20 im wesentlichen über die ganze Länge der Schneidfront 23 erstreckt. Die Elektrode 20 wird in Pfeilrichtung 35 zum Ausgleich des Abbrandes nachgeführt und bei fortschreitendem Schneidvorgang in Pfeilrichtung 26 entsprechend der Schnittrichtung nachgeführt zusammen mit der Sauerstoffdüse 27.

Die Sauerstoffdüse 27 ist nach Art einer Laval-Düse ausgebildet und mit ihrem Sauerstoffstrahl 28 auf die sich zwischen der vorderen Stirnfläche 25 und Schneidfront 23 ausbildende Schneidstelle 32 gerichtet.

Das Werkstück 31, das geschnitten werden soll, entspricht dem Werkstück 1 aus Figur 1 und der Schneidvorgang schreitet auch wie im Text zu Figur 1 bis 4 beschrieben abschnittsweise fort, wobei jeder einzelne Abschnitt, wie der Abschnitt, über den sich die Wirkung der Schneidstelle 32 erstreckt, wesentlich kleiner ist als die Stärke des Werkstücks 31. Mit 30 ist der Lichtbogen bezeichnet. Auch nach Figur 5 und 6 wird die Schneidfront 23 auf dem jeweiligen Abschnitt, zum Beispiel den Abschnitt der Schneidstelle 32, ein Stück vorangetrieben. Dann wird die Schneidstelle auf einen anderen Frontabschnitt verlegt, der weniger weit vorangetrieben ist als der vorherige und so fort. Die Elektrode 20 ist zu diesem Zweck elektrisch kontaktiert und der Sauerstoffstrahl ist als Überschallstrahl ausgebildet, wie dies im einzelnen im Text zu Figur 1 bis 4 erläutert wurde.

Durch die Wirkung des Sauerstoffstrahls wird Material auch noch unterhalb der Elektrode abgetragen, so daß die Elektrode 20 sich nicht unbedingt bis an das untere Ende der Schneidfront 23 erstrecken muß, also bis an das Ende, das der Sauerstoffzufuhr abgekehrt ist.

Die thermische Belastbarkeit der Elektrode hängt im wesentlichen vom Elektrodenquerschnitt und der freien Elektrodenlänge ab. Wie diese freie Länge variieren kann, sieht man in der unterschiedlichen Länge des freien Elektrodenendes 8 in Figur 1 beziehungsweise 17 in Figur 3. Bei Einsatz einer Bandelektrode wird dieser Nachteil ausgeschaltet. Das freie Elektrodenende 33 in Figur 5 gibt es auch, aber es steht ein wesentlich größerer elektrischer Leitungsquerschnitt zur Verfügung. Somit ist eine Bandelektrode höher mit Strom belastbar. Als Folge stellen sich mehrere Lichtbögen gleichzeitig ein, so daß sich mehrere Schneidstellen bilden und die Schneidgeschwindigkeit steigt wesentlich an.

Die Trennung Elektrode und Sauerstoffdüse erlaubt eine einfachere technische Lösung des Schneidbrenners und eine wirkungsvollere Zuführung des Sauerstoffs (Bündelung, Plazierung auf Schneidstelle, genauere Dosierung der Menge). Somit ist ein Schutz der Stromkontaktstelle (Kontaktrohr, Kontaktbacken) vor Sauerstoff nicht mehr erforderlich. Weiterer Vorteil der Bandelektrode ist, daß der Rechteckquerschnitt eine wesentlich geringere Pendelbewegung (gegenüber Draht) aufweist und somit genauer schneidet.

Nach Figur 7 und 8 ist mit 40 ein Werkstück aus Metall bezeichnet, in das bereits eine Schneidfuge 41 eingeschnitten wurde, die bis zu der Schneidfront 42 reicht. In die Schneidfuge 41 ist ein Überschall-Sauerstoffstrahl 43 aus einer Sauerstoffdüse 44 gerichtet, die nach Art einer Laval-Düse ausgebildet ist. Auf die Schneidfront 42 ist eine Drahtelektrode 45 gerichtet, und zwar im spitzen Winkel 46 schräg zur Schneidfront 42. Die Elektrode stammt aus einem Kontaktrohr- und Vorschubsystem 47, aus dem sie laufend entsprechend dem Abbrand an ihrem freien Ende in Pfeilrichtung 48 nachgeführt wird. Das Elektrodenvorschubsystem wird zusammen mit der Sauerstoffdüse 44 in Pfeilrichtung 49, also entsprechend der Schneidrichtung, vorgeschoben.

Ein die Schneidstelle 51 definierender Lichtbogen 50 bildet sich am Ende des freien Endes der Elektrode 45 aus. Die Wirkung der Schneidstelle erstreckt sich über den Abschnitt der Schneidstelle 51, der wesentlich kleiner ist als die Länge der Schneidfront. Sobald die Schneidfront auf diesem Abschnitt durch den Schneidvorgang in Schneidrichtung vorangetrieben ist, wird durch das Vorschubsystem 47 die Elektrode 45 in Pfeilrichtung 52 auf eine neue Schneidstelle 59 wie gestrichelt dargestellt verstellt. Dann wird an der neuen Schneidstelle 59 die Schneidfront in dem zugehörigen Abschnitt 54 vorangetrieben und so fort. Unter ständigem Wechsel der Lage der Schneidstellen, hervorgerufen durch eine hohe Pendelfrequenz im Bereich gemäß Doppelpfeil 52, wird die ganze Schneidfront 42 vorangetrieben, entsprechend wie es auch im Text zu Figur 1 bis 6 erläutert wurde.

Beim Wechsel von einer Schneidstelle zur anderen empfiehlt es sich unter Umständen, den Schneidvorgang zu unterbrechen. Das kann geschehen durch Abschalten des Stroms und/oder durch Zurückziehen der Elektrode entsprechend dem Doppelpfeil 55.

Bei der Ausführungsform nach Figur 7 und 8 läßt sich durch entsprechende Lage der Elektrode 45 die Lage der Schneidstelle genau bestimmen. Entsprechend kann man auch die Lage der Schneidstelle nach Figur 1 bis 6 beeinflussen, indem man die Elektrode bewegt, zum Beispiel um eine Achse senkrecht zur Zeichenebene schwenkt. Diese Beeinflussung erfolgt zweckmäßig in der Weise, daß die Schneidfront 3, 23 beziehungsweise 42 von oben nach unten abgearbeitet wird. Zu diesem Zweck wird der Schneidvorgang an der der Sauerstoffzufuhr zugekehrten oberen Schneidfront 56 begonnen und durch Bewegen des freien Elektrodenendes wird die Schneidstelle dann die Schneidfront entlang zur unteren Schneidfront 57 vorgeschoben. Nachdem die Schneidfront einmal abgearbeitet ist, wird wieder an der oberen Schneidfront neu begonnen und so fort. Der Vorschub in Richtung des Pfeils 49 erfolgt dann zweckmäßig schrittweise im Takt der beschriebenen Abarbeitungszyklen.

In Figur 9 ist mit 70 ein Gehäuse aus Messing bezeichnet. In diesem Gehäuse steckt ein Kontaktrohr 71 aus Kupfer, das in einem Kontaktrohrträger 72 eingeschraubt ist. Der Kontaktrohrträger weist an seinem hinteren Ende eine Isolierhülse 80 auf, die durch eine Mutter 81 festgeschraubt ist. Das in den Kontaktrohrträger 72 eingeschraubte Führungsrohr 73 weist einen Kanal 74 auf, an den sich ein Kanal 75 des Kontaktrohrträgers 72 anschließt. In diese beiden Kanäle paßt mit Spiel eine Drahtelektrode 76, die gemäß Pfeilrichtung 77 nachgeschoben wird.

An den Kanal 75 schließt sich ein Kontaktkanal 78 des Kontaktrohrs 71 axial an, in den die Drahtelektrode 76 mit wesentlich geringerem Spiel als in die Kanäle 74 und 75 paßt. Die Drahtelektrode ist über den Kontaktrohrträger 72 und einen nicht dargestellten, äußeren elektrischen Anschluß vorzugsweise mit dem Minus-Pol einer Gleichspannungsquelle kontaktiert.

Das vordere, unten gezeichnete Ende des Kontaktrohrträgers 72 und das Kontaktrohr sind von einem ringförmigen Hohlraum 84 umgeben, der in einen Ausfluß 82 mündet und mit einem Zufluß 83 über die Kanäle 74, 75, 78 kommuniziert. Am vorderen Ende ist in das Gehäuse 70 ein Düsenkörper 79 aus vorzugsweise Keramik eingesetzt, der durch eine Mutter 85 unter Zwischenlage einer Unterlegscheibe 86 festgesetzt ist.

Koaxial zum Kontaktkanal 78 erstreckt sich im Düsenkörper 79 ein Führungskanal 91, in den die Elektrode 76 mit sehr geringem Spiel paßt. Zwischen der Mündung 88 des Kontaktkanals 78 an der Stirnseite 89 und der Eintrittsöffnung 90 des Führungskanals 91 in den Düsenkörper 79 ist ein Schutzraum 92 ausgespart.

In den Düsenkörper mündet eine an eine äußere Sauerstoffzuleitung 93 anschließbare Sauerstoffleitung 94 über eine Ringverteilung 95. Von dieser Ringverteilung 95 gehen auf den Umfang verteilt vier konvergente Düsenkanäle 87, 107, 96 und 97 aus. Diese Düsenkanäle sind nach Art einer Laval-Düse geformt, das heißt sie verengen sich zunächst in Strömungsrichtung gemäß Pfeil 104 und erweitern sich anschließend bis zur zugehörigen Mündung 105 beziehungsweise 106. Die Mündungen der Düsenkanäle liegen in der Stirnseite 108 des Düsenkörpers 79, in der auch die Mündung 109 des Führungskanals 91 liegt.

Wichtig ist, daß die Mündung 109 des Führungskanals 91 gegenüber den Mündungen der divergenten Düsenkanäle 100 bis 103 nicht etwa bezogen auf die Zeichnung nach oben zurückgesetzt ist. Sie kann, wie dargestellt, auf gleicher Höhe sein oder weiter nach vorn ragen, also, bezogen auf die Zeichnung, nach unten, um sicherzustellen, daß kein Sauerstoff gegen die Pfeilrichtung 77 in den Führungskanal 91 strömt.

Bei Betrieb wird am Zufluß 83 vorzugsweise Kühlwasser eingeströmt, das unter anderem den Kontaktkanal 78 in Pfeilrichtung 77 durchsetzt und das Kontaktrohr 71 an ihrer Stirnseite 89 und an ihrem Umfang umströmt und dann am Ausfluß 82 wieder ausströmt. Sollten dennoch Reste von Sauerstoff den Führungskanal gegen die Pfeilrichtung 77 entlangströmen, dann werden diese von dem Kühlwasser erfaßt und abgeführt, ehe sie in den Kontaktkanal 78 gelangen können, wo Sauerstoff zu erheblichen Störungen Anlaß geben könnte.

Der Sauerstoff wird mit so hohem Druck eingeblasen, daß er mit Überschall-Geschwindigkeit in scharf gebündelten Strahlen in Pfeilrichtung 77 die divergenten Düsenkanäle 100 bis 103 verläßt. In der Ringverteilung 95 ist der Sauerstoffdruck zu diesem Zweck beispielsweise 10 bar und in der Schnittebene X etwa 1 bar.

Nach Figur 11 bis 13 sind in Abänderung des Ausführungsbeispiels nach Figur 9 zwei beziehungsweise sechs Düsenkanäle vorgesehen. In den Figuren 11 bis 15 sind Drahtelektroden mit 120 bis 124, Düsenkörper mit 125 bis 129 und Düsenkanäle mit 130 bis 147 bezeichnet. Nach Figur 11 bis 13 sind diese Düsenkanäle um den Führungskanal verteilt, nach Figur 12 gleichmäßig und nach Figur 11 und 13 ungleichmäßig mit einer Vorzugsrichtung auf der Zeichnung von rechts nach links, die bei Betrieb mit der Längserstreckung des Schneidfuge übereinstimmt.

Nach Figur 14 ist ein ringförmiger Düsenkanal vorgesehen, der sich koaxial um den Führungskanal erstreckt. Nach Figur 15 sind dreigeteilte Düsenkanäle dargestellt. Weitere Varianten können beliebig erstellt werden, wenn die verfahrensmäßige Zuführung des Sauerstoffs gewährleistet ist.

## Patentansprüche

1. Verfahren zum thermischen Schneiden von Werkstücken aus Metall, bei dem mit Hilfe einer Wärmequelle hohe Energiedichte auf einen begrenzten, die Schneidstelle bildenden Teil des Werktstückes eingewirkt wird und bei dem gleichzeitig damit ein Sauerstoffstrahl auf die Schneidstelle gerichtet wird,
**dadurch gekennzeichnet,**
daß die Schneidstelle jeweils nur auf einen Abschnitt der Front in Dickenrichtung einer Schneidfuge beschränkt ist, und zwar auf den in Dickenrichtung lokal vorstehenden Abschnitt,
daß, nachdem die Schneidfront auf dem jeweiligen Abschnitt ein Stück vorangetrieben ist, die Schneidstelle auf einen Frontabschnitt verlegt ist, der weniger weit vorangetrieben ist, als der vorherige und so fort,
daß die Wärmequelle hoher Energiedichte ein jeweils zeitlich begrenzt vorhandener Lichtbogen, ein Plasmabogen,
ein Laser- oder Elektronenstrahl ist, der örtlich an der Stelle des am meisten in Dickenrichtung vorstehenden Schneidfrontabschnittes das Werkstück auf mindestens Zündtemperatur erwärmt, und
daß der Sauerstoff in einem scharf gebündelten Strahl, vorzugsweise mit Überschallgeschwindigkeit, an die Schneidstelle innerhalb der Schneidfuge geblasen wird.

2. Verfahren nach Anspruch 1, dadurch gekennzeichnet,
daß zur Bildung der Schneidstelle ein oder mehrere Leitlich begrenzte Lichtbögen zwischen der Mantelfläche einer Elektrode und dem Werkstück erzeugt wird werden.

3. Verfahren nach Anspruch 2, dadurch gekennzeichnet,
daß eine Drahtelektrode eingesetzt wird, deren freies Ende sich innerhalb der Schneidfuge im wesentlichen entlang der Schneidfront erstreckt.

4. Verfahren nach Anspruch 1, dadurch gekennzeichnet,
daß das freie Ende einer drahtförmigen Elektrode innerhalb der Schneidfuge schräg zur Schneidfront auf diese gerichtet ist und
daß die Schneidstelle verlegt wird durch Verschieben des freien Endes der Elektrode entlang der Schneidfront.

5. Verfahren nach Anspruch 1, 2, dadurch gekennzeichnet,
daß eine bandförmige Elektrode eingesetzt wird, die innerhalb der Schneidfuge vorzugsweise schräg zur Schneidfront auf diese zugeführt wird und so breit ist, daß sich der durch Abbrennen bildende vordere Rand der Bandelektrode im wesentlichen über die ganze Länge der Schneidfront erstreckt.

6. Verfahren nach einem der vorhergehenden Ansprüche, dadurch gekennzeichnet,
daß der Schneidvorgang an dem der Sauerstoffzufuhr zugekehrten ersten Ende der Schneidfront begonnen wird,
daß durch Bewegen des freien Elektrodenendes die Schneidstelle an der Schneidfront entlang zum anderen Ende der Schneidfront verschoben wird und
daß dann am ersten Ende der Schneidfront wieder neu begonnen wird und so fort.

7. Schneidbrenner zur Ausübung des Verfahrens nach einem der vorhergehenden Ansprüche mit einem Düsenkörper (79), vorzugsweise aus Keramik oder einem anderen hochschmelzenden Werkstoff, der einen langgestreckten, an seiner Stirnseite (108) mündenden Führungskanal (91) aufweist, in dem die Elektrode (76) formschlüssig passend führbar ist, wobei von einer äußeren Sauerstoffzuleitung (93) ausgehende Düsenkanäle (87, 107 ...) im Düsenkörper verlegt sind, die um die Mündung (109) des Führungskanals in der Stirnseite (108) münden und in Strömungsrichtung zunächst verengt und anschließend bis zur Mündung erweitert ausgebildet sind,
**dadurch gekennzeichnet**, daß
- in den Düsenkörper eine an die äußere Sauerstoffzuleitung (93) anschließbare Sauerstoffleitung (94) über eine Ringverteilung (95) mündet,
- von dieser Ringverteilung (95) auf den Umfang verteilte Düsenkanäle oder ein Ringkanal ausgehen,
- diese Düsenkanäle beziehungsweise dieser Ringkanal nach Art einer Laval-Düse geformt sind und
- die Mündung (109) des Führungskanals (91) mindestens bis auf die Höhe der Mündungen (105, 106) der Düsenkanäle nach vorne ragt.

8. Schneidbrenner nach Anspruch 7, dadurch gekennzeichnet,
daß dem Führungskanal ( 91 ) axial und mit Abstand ein Kontaktkanal ( 78 ) zum Beispiel eines Kontaktrohrs ( 71 ) vorgeordnet ist und
daß insbesondere ein Fluidsystem (83,74,75,78,92,84,82) zur Kühlung vorgesehen ist, in das der Kontaktkanal, insbesondere gleichgerichtet mit dem Elektrodenvorschub, und Umfangsbereich ( 84, 92 ) des Kontakrohrs einbezogen sind.

## Claims

1. Method for thermocutting metal workpieces, in which, by means of a heat source, high energy density is exerted on a limited part of the workpiece forming the cutting location, and in which simultaneously therewith a jet of oxygen is directed at the cutting location, characterized in that the cutting location is in each case limited only to a section of the front in the thickness direction of a kerf, specifically to the section which projects locally in the thickness direction, in that, after the cutting front has advanced by a certain distance on the respective section, the cutting location is moved to a section of the front which is less far advanced than the previous one, and so on, in that the heat source of high energy density is an arc, a plasma arc, a laser or electron beam which is in each case present only for a limited time and heats the workpiece to at least the ignition temperature locally at the location of the section of the cutting front which projects the furthest in the thickness direction, and in that the oxygen is blown to the cutting location within the kerf in a strongly concentrated jet, preferably at supersonic speed.

2. Method according to Claim 1, characterized in that one or more arcs, which is/are limited in terms of time, is/are produced between the circumferential surface of an electrode and the workpiece, in order to form the cutting location.

3. Method according to Claim 2, characterized in that a wire electrode is used, the free end of which extends essentially along the cutting front within the kerf.

4. Method according to Claim 1, characterized in that the free end of a wire-shaped electrode is directed obliquely onto the cutting front within the kerf, and in that the cutting location is moved by displacing the free end of the electrode along the cutting front.

5. Method according to Claim 1 or 2, characterized in that a strip-shaped electrode is used, which is guided obliquely onto the cutting front inside the kerf and is so wide that the front edge of the strip electrode which is formed by burning off extends essentially over the entire length of the cutting front.

6. Method according to one of the preceding claims, characterized in that the cutting operation is commenced at the first end of the cutting front, facing the oxygen supply, in that the cutting location is displaced along the cutting front to the other end of the cutting front by moving the free end of the electrode, and in that the process is recommenced at the first end of the cutting front, and so on.

7. Cutting torch for carrying out the method according to one of the preceding claims, having a nozzle body (79), preferably made of ceramic or another high-melting material, which has an elongate guide duct (91) opening at its end (108), in which guide duct the electrode (76) is guided so as to fit in a positively-locking manner, nozzle ducts (87, 107 ...) being positioned in the nozzle body, which ducts start at an outer oxygen feedline (93), open out around the opening (109) of the guide duct in the end (108) and initially narrow in the direction of flow and then widen out towards the opening, characterized in that
- an oxygen line (94) which can be connected to the outer oxygen feed line (93) opens into the nozzle body via an annular distributor (95),
- nozzle ducts distributed around the periphery or an annular duct lead from this annular distributor (95),
- these nozzle ducts or this annular duct are formed in the manner of a Laval nozzle, and
- the opening (109) of the guide duct (91) projects forwards at least to the height of the openings (105, 106) of the nozzle ducts.

8. Cutting torch according to Claim 7, characterized in that a contact duct (78), for example of a contact tube (71), is arranged axially at a distance upstream from the guide duct (91), and in that in particular a fluid system (83, 74, 75, 78, 92, 84, 82) is provided for cooling, which system includes the contact duct, in particular in the same direction as the displacement of the electrode, and circumferential region (84, 92) of the contact tube.

## Revendications

1. Procédé destiné au découpage thermique de pièces en métal, dans lequel on agit à l'aide d'une source de chaleur à forte densité d'énergie sur une partie limitée de la pièce qui constitue l'endroit du découpage, et dans lequel on dirige en même temps un jet d'oxygène sur l'endroit du découpage, caractérisé :
- par le fait que l'endroit du découpage n'est à chaque fois limité qu'à une partie du front dans la direction de l'épaisseur d'une fente de découpage, et ce, sur la partie qui fait saillie localement dans la direction de l'épaisseur,
- par le fait qu'après que le front de découpage a légèrement avancé jusque sur la partie correspondante, on déplace l'endroit du découpage jusque sur une partie du front qui a moins avancé que la précédente, et ainsi de suite,
- par le fait que la source de chaleur à forte densité d'énergie est un arc électrique, un arc à plasma, un rayon laser ou un jet d'électrons qui est à chaque fois présent d'une manière limitée dans le temps et qui chauffe localement la pièce, du moins jusqu'à la température d'inflammation, à l'endroit de la partie du front de découpage qui est le plus en saillie dans la direction de l'épaisseur, et :
- par le fait que l'oxygène est soufflé à l'endroit du découpage, à l'intérieur de la fente de découpage, sous la forme d'un jet fortement concentré et de préférence à une vitesse supersonique.

2. Procédé selon la revendication 1, caractérisé par le fait que, pour former l'endroit du découpage, on engendre un ou plusieurs arcs électriques limités dans le temps entre la surface latérale d'une électrode et la pièce.

3. Procédé selon la revendication 2, caractérisé par le fait que l'on utilise une électrode en forme de fil dont l'extrémité libre s'étend à l'intérieur de la fente de découpage, pour l'essentiel le long du front de découpage.

4. Procédé selon la revendication 1, caractérisé :
- par le fait que l'extrémité libre d'une électrode en forme de fil est dirigée vers le front de découpage, obliquement par rapport à celui-ci, à l'intérieur de la fente de découpage, et :
- par le fait que l'endroit du découpage est déplacé par déplacement de l'extrémité libre de l'électrode le long du front de découpage.

5. Procédé selon la revendication 1 ou 2, caractérisé par le fait que l'on utilise une électrode en forme de bande qui est amenée sur le front de découpage, de préférence obliquement par rapport à celui-ci, à l'intérieur de la fente de découpage, et qu'elle est suffisamment large pour que le bord avant de l'électrode en forme de bande qui se forme par combustion s'étende pour l'essentiel sur toute la longueur du front de découpage.

6. Procédé selon l'une des revendications précédentes, caractérisé :
- par le fait que l'on commence l'opération de découpage à la première extrémité du front de découpage qui est tournée vers l'amenée d'oxygène,
- par le fait que, par déplacement de l'extrémité libre de l'électrode, on déplace l'endroit du découpage le long du front de découpage vers l'autre extrémité du front de découpage, et :
- par le fait que l'on commence à nouveau à la première extrémité du front de découpage, et ainsi de suite.

7. Chalumeau de découpage pour la mise en oeuvre du procédé selon l'une des revendications précédentes, comprenant un corps de buse (79), de préférence en céramique ou en un autre matériau à point de fusion élevé, lequel présente un canal de guidage allongé (91) qui débouche sur son côté frontal (108) et dans lequel l'électrode (76) peut passer avec un ajustement par conjugaison des formes, cependant que des canaux de buse (87, 107, ...) sont disposés dans le corps de buse en partant d'un conduit d'amenée d'oxygène extérieur (93), qu'ils débouchent dans le côté frontal (108) autour de l'embouchure (109) du canal de guidage, qu'ils sont conformés en se rétrécissant tout d'abord dans la direction de l'écoulement, puis en s'élargissant jusqu'à l'embouchure, caractérisé par le fait que :
- un conduit à oxygène (94) qui peut être raccordé au conduit d'amenée d'oxygène extérieur (93) débouche dans le corps de buse par l'intermédiaire d'une distribution annulaire (95),
- des canaux de buse répartis sur le pourtour ou un canal annulaire part de cette distribution annulaire (95),
- ces canaux de buse ou ce canal annulaire, respectivement, sont conformés ou est conformé à la manière d'une tuyère de Laval, et :
- l'embouchure (109) du canal de guidage (91) fait saillie vers l'avant, du moins jusqu'au niveau des embouchures (105, 106) des canaux de buse.

8. Chalumeau de découpage selon la revendication 7, caractérisé :
- par le fait qu'un canal de contact (78), par exemple d'un tube de contact (71), est monté axialement en amont du canal de guidage (91) et à distance de celui-ci, et :
- par le fait qu'il est prévu en particulier, en vue du refroidissement, un système à fluide (83, 74, 75, 78, 92, 84, 82) dans lequel sont introduits le canal de contact qui est en particulier dirigé dans la même direction que l'avance de l'électrode et la zone du pourtour (84, 92) du tube de contact.
